# EUROPEAN PATENT SPECIFICATION

(11) **EP 3 389 990 B1**
(45) Date of publication and mention of the grant of the patent: **23.09.2020**
(21) Application number: 16819811.7
(22) Date of filing: 14.12.2016
(51) Int. Cl.: B29C 63/04

(54) **METHOD AND APPARATUS FOR MAKING A LAYER OF MATERIAL TO BE APPLIED TO A LEADING EDGE OF A WIND TURBINE BLADE**
VERFAHREN UND VORRICHTUNG ZUR HERSTELLUNG EINER MATERIALSCHICHT ZUM AUFTRAGEN AUF EINE VORDERKANTE EINER WINDTURBINENSCHAUFEL
PROCÉDÉ ET APPAREIL DE FABRICATION D'UNE COUCHE DE MATÉRIAU DESTINÉE À ÊTRE APPLIQUÉE SUR UN BORD D'ATTAQUE D'UNE PALE D'ÉOLIENNE

(30) Priority: 15.12.2015 GB 201522140; 12.08.2016 GB 201613855
(43) Date of publication of application: 24.10.2018
(73) Proprietor: Vestas Wind Systems A/S, 8200 Aarhus N (DK)
(72) Inventor: NIELSEN, Knud Stenbæk, 6900 Skjern (DK); NIELSEN, Kim Sylvester, 6880 Tarm (DK)
(74) Representative: Vestas Patents Department
(86) International application number: PCT/DK2016/050432
(87) International publication number: WO 2017/101948

(56) References cited:
- DE-T2- 68 903 896
- GB-A- 412 300
- US-A1- 2009 295 015

## Description

### Field of the invention

The invention relates to a method and apparatus for making a layer of material to be applied to a leading edge of a wind turbine blade, and to a method and apparatus for applying a layer of material to a leading edge of a wind turbine blade.

### Background to the invention

It is often necessary to apply layers of material such as paint, resin, adhesives, precured polymer tapes, or other pre-shaped layers to the leading edge of a wind turbine blade during its manufacture and during on-site maintenance (cf. GB412300). For example, an erosion-resistant paint or leading edge protection layer is applied to the leading edge of the blade during manufacture to resist erosion of the leading edge due to precipitation and airborne particles while the blade is in use. During use, the erosion-resistant paint can be gradually eroded and it can therefore be necessary to re-apply the paint to the leading edge of the wind turbine blade on-site.

It is important that such paint is applied uniformly to the surface of the wind turbine blade and that the thickness of the layer is carefully controlled. If the paint is not uniform, some regions will be too thin, and will not provide sufficient erosion resistance. An even layer is particularly important at the leading edge of the blade, because any roughness or inconsistencies at the leading edge will disturb the air flow around the blade and lead to a reduction in the aerodynamic efficiency of the wind turbine.

The erosion-resistant paint is typically applied by spraying or using a brush or roller. However, it is difficult to apply such layers of material evenly and smoothly to the curved surface at the leading edge of a wind turbine blade. For example, in a typical two-component erosion-resistant paint, the paint is very fluid in its initial state when it has just been mixed, and has a low viscosity. When applied to the curved surface of the leading edge, the low viscosity means that the paint tends to run down the contours of the curves making it difficult to apply evenly. Shortly after the paint has been mixed (in some cases, within a few minutes), the paint begins to gel and the viscosity of the paint increases; however, in this gelled state it is too viscous to be spread evenly and smoothly. Given that the paint has a low gel point (meaning that it gels quickly) there is therefore only a very short window in which the paint is at a viscosity that is suitable for even spreading. Thus, it is very difficult to achieve a paint viscosity that allows even application of the paint to the leading edge of the wind turbine blade.

Pre-cured polymer tapes are typically attached manually using adhesives that are applied to a blade-facing surface of the tape. However, applying tapes in this way requires significant skill and diligence. If the tape is not skilfully applied, the tape may be uneven or damaged.

It would be desirable to overcome or mitigate the problems described above.

### Summary of the invention

Against this background, from a first aspect, the invention resides in a method of making a layer of cured material for application to a leading edge of a wind turbine blade, the method comprising: arranging a flexible substrate in an application configuration in which a layer-supporting surface of the flexible substrate is substantially flat; applying a layer of liquid material to the layer-supporting surface; reconfiguring the flexible substrate into a curing configuration in which a part of the layer-supporting surface that supports the layer of material is curved; and curing the layer of material with the flexible substrate in the curing configuration to form a curved layer of cured material on the flexible substrate.

By "flexible" is meant that the substrate can be deformed elastically. In particular, the substrate can be deformed elastically between the application and the curing configuration.

The method produces a flexible substrate supporting a cured or semi-cured layer that is pre-cured into a curved shape. Said another way, the layer is configured such that if the layer were to be laid flat after curing, the upper and lower surfaces of the layer would exhibit different stresses. In particular, one surface would exhibit a tensile stress while the other would exhibit a compressive stress.

When the resulting layer is applied to a leading edge of a wind turbine blade, it is forced to adopt a curved configuration, similar to the configuration it adopted as it was cured. If the layer had been cured in a flat configuration, this curved configuration (when applied to a leading edge) would lead to a difference in the stress state in the upper and lower surfaces of the layer, which may lead to a decreased ability to absorb precipitation strikes and hence a decreased erosion-resistance performance.

However, because the layer produced by the method of the invention is pre-cured into a curved shape, the layer will be subject to a lower stress than would otherwise have been present when the layer is applied to the leading edge. Thus, the stress differential at the surfaces of the layer is removed, or at least reduced, leading to a more robust layer that provides more effective erosion resistance.

For particular ease of application of the liquid material, the step of arranging the flexible substrate in the application configuration may comprise arranging at least a part of the flexible substrate on a flat surface.

The step of arranging the flexible substrate in the curing configuration may comprise arranging at least a part of the flexible substrate on a curved surface.

The step of reconfiguring the flexible substrate may comprise moving the flexible substrate from a first support structure configured to support the flexible substrate in the application configuration to a second support structure configured to support the flexible substrate in the curing configuration. In another embodiment, the step of reconfiguring the flexible substrate may comprise moving the flexible substrate between different parts of the same support structure.

The layer of liquid material applied to the layer-supporting surface may define a footprint that is elongate along a longitudinal axis, and the step of reconfiguring the flexible substrate into the curing configuration may comprise causing at least a part of the flexible substrate to fold about the longitudinal axis. In this way, the layer may be elongate to follow the elongate leading edge of a wind turbine blade, and may be easily shaped so as to mimic the curved shape of the leading edge during curing by a simple folding action.

The step of applying a layer of liquid material to the layer-supporting surface may comprise applying a liquid layer of substantially uniform thickness to the layer-supporting surface. This is particularly advantageous as it means that, once the layer of material is cured, it provides a cured layer of substantially uniform thickness, which, when applied to the leading edge, provides a smooth profile.

The step of applying a liquid layer of substantially uniform thickness may comprise: providing a liquid container comprising dispensing slot of substantially uniform height; and allowing liquid to flow from the liquid container onto the layer-supporting surface via the dispensing slot. Such a method of dispensing the layer is particularly quick and inexpensive whilst maintaining careful control of the layer thickness.

The method may comprise applying a layer of liquid material having a thickness less than approximately 5 mm.

So that the thickness of the layer is not altered due to flow of the liquid layer as it is reconfigured into the curing configuration, the method may comprise allowing the layer of liquid material to cure partially to increase the viscosity of the liquid layer before reconfiguring the flexible substrate into the curing configuration.

For a fast manufacturing process, the method may comprise heating the layer of material while the flexible substrate is in the curing configuration to cure the layer of liquid material.

The liquid material may comprise a curable liquid paint or resin.

The invention also extends to a method of applying a layer of material to a leading edge of a wind turbine blade, the method comprising making a layer of cured material according the method described above, and applying the layer of cured material to the leading edge.

The step of applying the layer of cured material to the leading edge of the wind turbine blade may comprise wrapping a flexible substrate supporting the layer of cured material around the leading edge, and transferring the layer of material from the flexible substrate to the leading edge of the wind turbine blade. Wrapping the flexible substrate and hence the layer of cured material around the leading edge in this way is a particularly effective means of transferring the layer of material securely to the wind turbine blade, with minimal disturbance to the layer. The same flexible substrate part may be used both to cure the layer of material and to transfer the layer of material to the leading edge; alternatively, the layer of material may, for example, be cured on a first flexible substrate part and transferred to a second flexible substrate part for application to the leading edge.

The step of wrapping the flexible substrate around the leading edge may comprise: arranging the flexible substrate in relation to the leading edge of the wind turbine blade with the flexible substrate in a presentation configuration such that an initial area of contact is defined between the layer of material and the leading edge; and reconfiguring the flexible substrate into a transfer configuration in which the flexible substrate adopts the contours of the leading edge by increasing the area of contact between the layer of material and the leading edge. Gradually increasing the area of contact in this way tends to cause air to be effectively expelled towards the edges of the membrane as the area of contact grows, which guards against air becoming trapped between the layer of material and the leading edge of the wind turbine blade, thereby improving the adhesion of the layer and the aerodynamic performance of the leading edge.

The flexible substrate can be deformed elastically. In particular, the substrate can be deformed elastically between the presentation and transfer configurations; so that the substrate adopts the contours of the leading edge of the blade.

To facilitate adhesion of the layer of material to the leading edge, the method may comprise applying an adhesive layer to the layer of cured material before applying the layer of cured material to the leading edge of a wind turbine blade.

For particularly effective bonding, the adhesive layer may be a layer of liquid adhesive, and the layer of cured material and the layer of liquid adhesive may be layers of substantially the same material in cured and liquid states respectively.

The layer of material may be applied to the blade in-situ on a wind turbine.

An apparatus for making a cured layer of material for application to a leading edge of a wind turbine blade may be provided, the apparatus comprising a flexible substrate that is reconfigurable between an application configuration in which a layer-supporting surface of the flexible substrate is substantially flat and a curing configuration in which the layer-supporting surface is substantially curved, and a substrate support configured to support the flexible substrate in the application configuration and the curing configuration.

The substrate support may comprise a flat surface for supporting the flexible substrate in the application configuration.

The substrate support may comprise a curved surface for supporting the flexible substrate in the curing configuration.

The curved surface may be concave. By providing a concave surface, the layer of material may be cured into the desired shape on the flexible substrate such that a concave surface of the layer of material faces outwardly, away from the substrate. In this way, the surface that was concave during curing can be presented to a leading edge of a blade without the need to rearrange the layer of material any further. Alternatively, the curved surface may be convex, in which case the layer of material may need to be removed from the substrate and rearranged before application to the leading edge.

The curved surface may be defined by a substantially gutter-shaped formation on the substrate support.

The substrate support may comprise a first support structure configured to support the flexible substrate in the application configuration and a second support structure configured to support the flexible substrate in the curing configuration.

The flexible substrate may comprise a flexible membrane. The flexible substrate may have thickness that is less than approximately 2 mm. The flexible substrate may be made of a material selected from the group of: silicon rubber, polyurethane, polyethylene, polypropylene or nylon. By flexible is meant that the substrate can change shape upon relative movement of the flexible substrate and the leading edge towards one another without breaking.

For particular ease of application of the layer of material to the flexible substrate, the apparatus may comprise an applicator for applying a layer of material to the flexible substrate. For particularly careful control of the thickness of the layer of material, the applicator may comprise a container provided with slot for dispensing the material onto the flexible substrate.

The flexible substrate may be further reconfigurable into a presentation configuration in which, in use, a layer of material supported by the flexible substrate can be offered up to the leading edge of the wind turbine blade to define an initial area of contact between the layer of material and the leading edge, and a transfer configuration in which the flexible substrate adopts the contours of at least a portion of the leading edge; and the substrate support is further configured to support the flexible substrate in the presentation and transfer configurations such that the flexible substrate can be reconfigured from the presentation configuration into the transfer configuration by increasing the area of contact between the layer of material and the leading edge upon relative movement of the flexible substrate and the leading edge towards one another.

Such an apparatus provides a gentle wrapping motion that minimises the chance of damage to the layer of material during application. Gradually increasing an area of contact tends to cause air to be effectively expelled towards the edges of the membrane as the area of contact grows, which guards against air becoming trapped between the layer of material and the leading edge of the wind turbine blade, thereby improving the adhesion of the layer and the aerodynamic performance of the leading edge. Furthermore, in cases where a liquid adhesive layer is applied to the layer of material, at an edge region of the layer, the wrapping motion also causes a small amount of liquid adhesive material in the edge region to be displaced outwards so that the material in the edge region tapers to zero thickness. This tapering thickness in the edge region of the layer, avoids any 'step' on the leading edge where the layer of material ends, which improves the aerodynamic performance of the blade.

For particular ease of transfer of the layer to the leading edge, the substrate support may comprise a resistive element that may be configured to apply a resistive force to push the flexible substrate against the leading edge as the flexible substrate and the leading edge are moved towards one another.

The flexible substrate may comprise first and second flexible substrate parts, the first flexible substrate part being reconfigurable into the application and curing configurations and the second flexible substrate part being reconfigurable into the presentation and transfer configurations. Alternatively, the flexible substrate may comprise a single flexible substrate part may be reconfigurable into the application, curing, presentation and transfer configurations.

The substrate support may comprise a first substrate support structure configured to support the flexible substrate in the application and curing configurations and a second substrate support structure configured to support the flexible substrate in the presentation and transfer configurations.

An apparatus for applying a layer of material to a leading edge of a wind turbine blade may be provided, the apparatus comprising a flexible substrate and a layer of cured or semi-cured material for application to a leading edge of a wind-turbine blade, the layer being supported by the flexible substrate and having a substrate-facing surface and an outward-facing surface, wherein the flexible substrate is configurable into an application configuration in which the substrate adopts the contours of the leading edge of a wind turbine blade, and wherein the layer of material is configured such that, if the flexible substrate is arranged in a flat configuration, an inherent stress in the outward-facing surface of the layer is tensile and an inherent stress in the substrate-facing surface of the layer is compressive.

The layer of material is configured to have inherent stresses when laid flat, but to have substantially no inherent stress when it is arranged with the outward-facing surface in a concave configuration. In this way, when the layer of material is applied to the leading edge, and the outward-facing surface faces against the leading edge to adopt a concave configuration, there will be no inherent stress in the layer, which improves the energy-absorption properties of the layer and thereby improves its erosion-resistance.

The layer of material may comprise a layer of cured or semi-cured paint. The paint may be an erosion-resistant paint. The layer of material may have a thickness less than 5 mm. The layer of material may have a thickness less than 2 mm.

### Brief description of the drawings

In order that the present invention may be more readily understood, examples of the invention will now be described with reference to the remaining figures, in which:
Figures 1 and 1b are perspective views of a wind turbine blade and apparatus for applying a layer of material to a leading edge of a wind turbine blade according to an aspect of the invention;
Figure 2 is a perspective view of apparatus for making a layer of cured or semi-cured material and applying the layer to a leading edge of a wind turbine blade according to an aspect of the invention;
Figure 3 is a schematic view of an applicator forming part of the apparatus of Figure 1;
Figure 4 is a perspective view of a dispensing container forming part of the applicator of Figure 3;
Figure 5 is a cross-section view of a flexible substrate forming a part of the apparatus of Figure 2 supported by a first support structure forming a part of the apparatus of Figure 2 in an application configuration and ready to receive a layer of material;
Figure 6 is a cross-section view of the flexible substrate of Figure 5 with a layer of liquid material being applied using the applicator of Figures 3 and 4;
Figure 7 is a perspective view of the flexible substrate of Figure 6 with the layer of liquid material in place;
Figure 8 is a cross-section view of the flexible substrate supported by a second support structure forming a part of the apparatus of Figure 1 in a curing configuration during curing of the liquid;
Figure 9 is a cross-section view of the flexible substrate supporting the cured layer of material in a flat configuration;
Figures 10a and 10b are cross-section views of a substrate support forming part of the apparatus of Figure 2 in a presentation configuration and a transfer configuration respectively;
Figure 11 is a cross-section view of a flexible substrate supporting a cured layer of material with a layer of liquid adhesive applied;
Figure 12 is a cross-section view of the apparatus of Figure 9 ready to apply a layer of material to the leading edge of a wind turbine blade;
Figure 13 is a cross-section view of the substrate support with the substrate in a presentation configuration, with the layer of material in contact with the leading edge of the blade;
Figure 14 is a cross-section view of the substrate support with the substrate in a transfer configuration in which the substrate has adopted the contours of the leading edge of the wind turbine blade such that the layer of material is wrapped around the leading edge; and
Figure 15 is a cross-section view of the leading edge of the wind turbine blade after the substrate support has been removed; and
Figure 16 is a cross-section view of layer of material applied to the leading edge of the wind turbine blade.

It will be appreciated them the elements illustrated in the Figures are not drawn to scale.

### Detailed description of embodiments of the invention

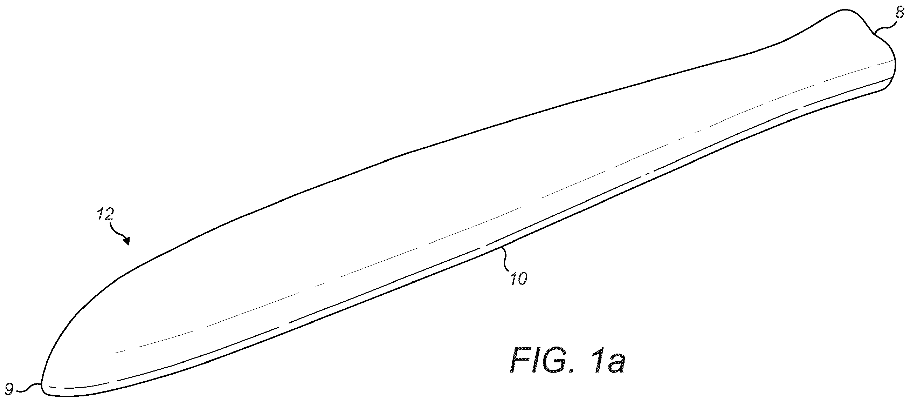

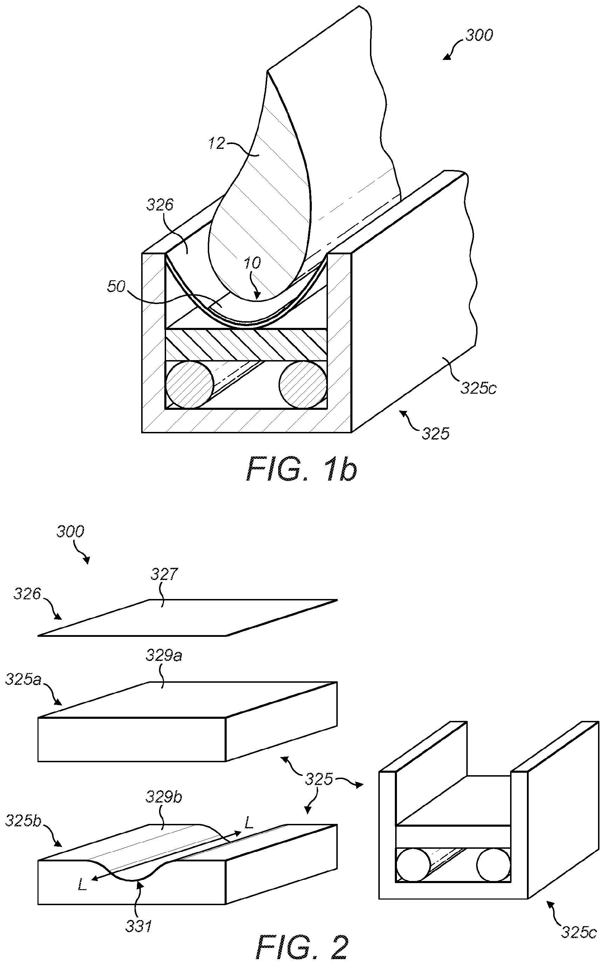

Figure 1a illustrates a wind turbine rotor blade 12 which extends from a root end 8 to a tip end 9. The blade comprises a leading edge 10 to which a layer of material is applied as described further below. Figure 1b shows a section of the blade 12 at its tip end and part of an apparatus 300 for applying a layer of material 50 to a leading edge 10 of a wind turbine blade 12. In the context of this invention, the leading edge 10 is the edge region to which the layer of material will be applied, and includes the actual leading edge as well as the area on the suction surface and the pressure surface which surround the leading edge, to which the layer of material will be applied.

Figure 2 illustrates the apparatus 300 for making a layer of cured material and applying that layer to a leading edge of the wind turbine blade.

The layer of cured material 50 may take many different forms. For example, the layer of material 50 may be a paint, or it may be another material such as a resin (for example a polyurethane, epoxy or methacrylate resin) or other coating. The layer may be fully cured or it may be partially cured. In the forgoing exemplary embodiment, the layer of material 50 takes the form of a film of cured paint.

The apparatus 300 comprises a substrate support 325 comprising first, second and third support structures 325a, 325b, 325c and a substrate 326 in the form of a flexible membrane.

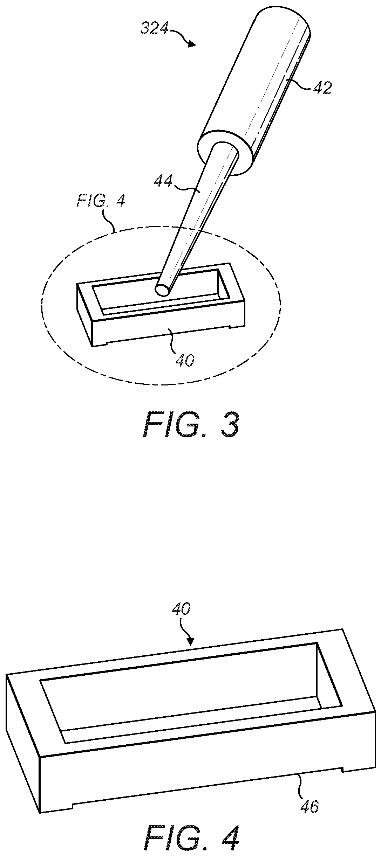

An upper surface 327 of the flexible membrane 326 defines a layer-supporting surface that supports the layer of material when the apparatus is in use. The first support structure 325a is configured to support the membrane 326 in an application configuration in which a part of the layer-supporting surface 327 to which the layer of material 50 is to be applied is substantially flat. With the membrane in this application configuration, an applicator 324 (described below with reference to Figures 3 and 4) is used to apply a layer of liquid material, such as liquid paint, to the membrane when the membrane is in this application configuration. The second support structure 325b is configured to support the membrane 326 in a curing configuration in which a part of the layer-supporting surface 327 of the membrane 326 to which the layer of material 50 is to be applied is substantially curved. With the membrane 326 in this curing configuration, the layer of liquid material is cured into a concave shape. The cured layer is then applied to a leading edge of a wind turbine blade using the third substrate support structure 325c, where it will adopt a curved shape similar to the shape that it adopted during curing.

In this way, first and second substrate support structures 325a, 325b, the membrane 326 and the applicator 324 define apparatus for making the cured or semi-cured layer, and the membrane 326 and third substrate support structure 325c define apparatus for applying the layer to a leading edge of a wind turbine blade.

Turning first to the apparatus for making the cured or semi-cured layer, and considering the membrane 326 in more detail, the flexible membrane 326 is made of a soft, flexible material, such as a silicon rubber or a polyolefin. Alternatively, the membrane 326 may be made from another suitable plastics material such as polyurethane, polyethylene, polypropylene or nylon. The membrane has a thickness of less than 2mm, and preferably less than 1mm. In this way, the membrane is flexible so as to allow easy reconfiguration of the membrane.

The layer-supporting surface 327 of the flexible membrane 326 is smooth and non-stick, so as to provide a smooth finish to the layer of material after application to the leading edge, and so as to facilitate transfer from the flexible membrane 326 to the leading edge.

Turning to the substrate support 325, the support 325 comprises first and second support structures 325a, 325b, each having a substrate-supporting surface 329a, 329b.

The first support structure 325a is configured to support the membrane 326 in an application configuration in which a part of the layer supporting surface 327 of the membrane 326 to which the layer of material 50 is to be applied is substantially flat. To this end, the first support structure comprises a substantially flat substrate-supporting surface 329a.

The second support structure 325b is configured to support the membrane 326 in a curing configuration in which a part of the layer-supporting surface 327 of the membrane 326 to which the layer of material 50 is to be applied is substantially curved, and in particular in this example is curved in a concave configuration. To this end, the substrate-supporting surface 329b comprises a curved portion 331. More specifically, the curved portion 331 defines a gutter-shaped formation having a concave surface that is curved about a longitudinal axis L.

Figures 3 and 4 illustrate in further detail the applicator 324 for applying a layer of material to the flexible membrane 326.

Referring to Figure 3, the applicator 324 comprises a dispensing container 40 for holding the material to be applied, a storage volume 42 for storing the material and a transmission means 44 for transmitting the material from the storage volume 42 to the dispensing container 40.

As seen in Figure 4, the dispensing container 40 is formed as a frame, with four side walls and no top or bottom surface. A front wall of the dispensing container comprises a slot 46. In use, material is dispensed through the slot 46 onto the flexible membrane 326 (not visible in Figure 4).

In the embodiment shown, the storage volume 42 is a substantially cylindrical tube that is sealed at both ends, and the transmission means 44 is a length of flexible pipe that joins the storage volume 42 to the dispensing container 40.

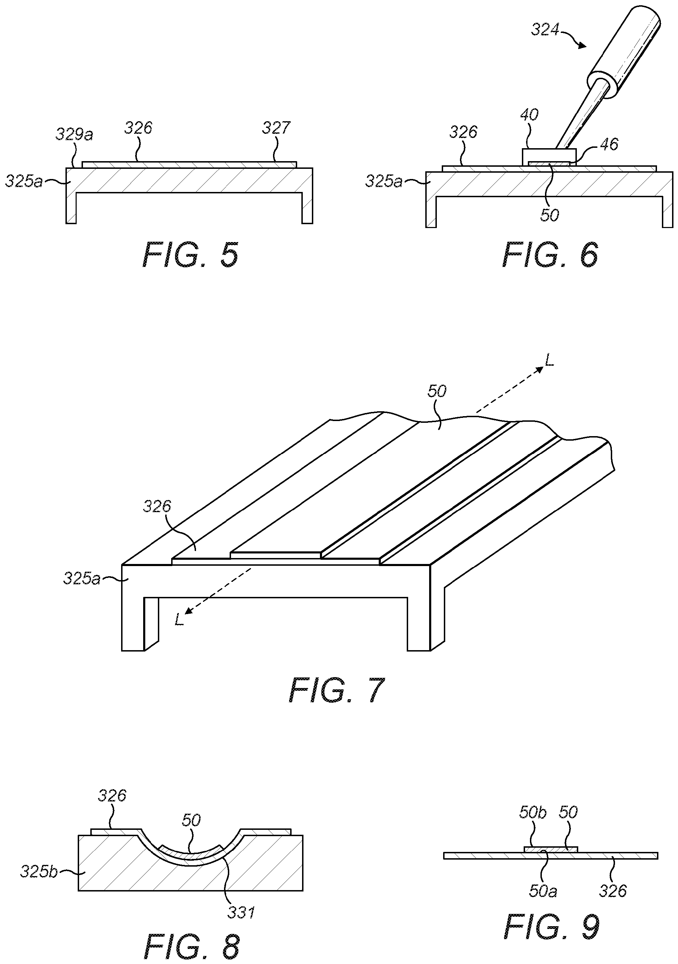

The use of the apparatus 300 in making the layer of cured or partially-cured material 50 will now be described with reference to Figures 5 to 9.

The process of making the layer may take place on site shortly before the layer of material is applied to the leading edge of a wind turbine blade, or the process may take place offsite at a separate facility, such that the flexible membrane 326 is provided to the site with the layer of material pre-applied.

First, the flexible membrane 326 is arranged in the application configuration as shown in Figure 5. To this end, the membrane 326 is allowed to rest on the flat support surface 329a of the first support structure 325a of the substrate support 325. Here the first support structure 325a is in the form of a table.

Next, as shown in Figure 6, a layer of curable liquid material, in this case liquid paint 50, is applied to the flat portion of the flexible membrane 326 using the applicator 324. The liquid paint is passed from the storage volume 42 to the dispensing container 40 via the transmission means 44. Once in the dispensing container 40, liquid paint is dispensed onto the flexible membrane 326 from the slot 46. The applicator 324 is dragged along the length of the flexible membrane 326 to apply the layer of paint along the entire length or just part of the length of the flexible membrane 326.

The resulting layer of paint 50 is shown in Figure 7. The footprint of the layer is an elongate strip that extends along a longitudinal axis L. The layer is of a uniform and predetermined thickness that is controlled by the size and shape of the slot 46. The layer of paint may be of any suitable predetermined thickness, and is typically between 0.5 mm and 1 mm thick, though layers are also envisaged that are 5 mm or more in thickness. If the desired width of the layer of material is greater than that of the width of the slot 46, the applicator can be used to apply multiple layers of paint in parallel on the substrate.

After application, the liquid paint 50 is allowed to gel or partially cure. In particular the liquid paint is allowed to gel until it has a sufficiently high viscosity that it will not flow under the action of gravity. This may take less than 5 minutes, and may, for example require a period of 1 minute. At this stage, the membrane 326 can be moved without disturbing the layer of liquid material.

Once the layer of liquid paint has gelled sufficiently, the membrane 326 is reconfigured into a curing configuration, shown in Figure 8. In the curing configuration, the part of the membrane 326 that supports the layer of liquid paint 50 is arranged in a substantially concave configuration.

Reconfiguration of the membrane 326 into the curing configuration is achieved by causing the membrane 326 to fold partially in a direction perpendicular to the longitudinal axis L so as to cause the membrane 326 to adopt a curved configuration in the vicinity of the layer 50. To this end, the membrane 326 is transferred to the second substrate support 325b and is allowed to rest on the upper support surface 329b with the layer of liquid material 50 overlying the gutter-shaped formation 331, so that it adopts the curved configuration.

After the membrane 326 has been reconfigured into the curing configuration the liquid paint is allowed to cure to form a layer or film of solid paint 50. To effect curing, it may be sufficient to allow the paint to rest for a period of time under atmospheric conditions. For example, the paint may be allowed to cure under atmospheric conditions for a period of 5 minutes to several hours. Alternatively, the layer may be heated to an elevated temperature to expedite the curing process. For example, the layer may be heated to temperatures between 30 °C and 100 °C, or even higher if required, and may be held at that temperature for a time period of 5 minutes to several hours. To this end, a heating means (not shown) may be incorporated into the second substrate support 325b to heat the flexible membrane 326.

After the curing stage, the resulting film of solid paint 50 may be fully cured, or it may be partially cured.

By curing the paint in the concave curing configuration, the paint is pre-cured into its solid form with a concave shape as shown in Figure 8.

If the membrane 326, and hence the resulting solid film 50are now arranged in a flat configuration as shown in Figure 9, the solid film would be deformed from the curved shape to a flat shape. Therefore. an inherent stress will be present in the film 50. That stress would differ between the upper and lower surfaces 50a, 50b of the film 50. In particular, in the substrate-facing surface 50a (the lower surface of Figure 9) the stress would be compressive, whereas in the outward-facing surface 50b (the upper surface of Figure 9) the stress would be tensile.

Turning now to the apparatus for applying the layer of material to the leading edge of the wind turbine blade, and referring back to Figure 1a, this illustrates the membrane 326 and layer of material 50 of Figure 8 being used in conjunction with the third substrate support structure 325c to apply the layer of material 50 to the leading edge 10 of the wind turbine blade 12.

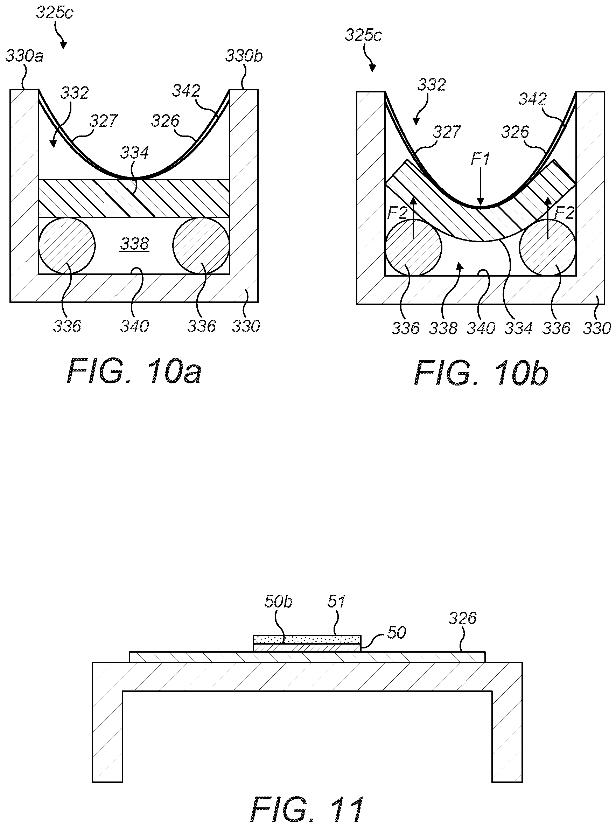

The third substrate support 325c and flexible membrane 326 are configured such that, upon movement of the leading edge 10 and the flexible membrane 326 towards one another, the flexible membrane 326 will first adopt a presentation configuration, shown in Figure 10a, in which the layer of material 50 is offered up to the leading edge 10 of the wind turbine blade 12 to define an initial area of contact between the layer of material 50 and the leading edge 10, and upon continued movement of the leading edge 10 and the flexible membrane 326 towards one another, the flexible membrane 326 will then be reconfigured by increasing the area of contact between the layer of material 50 and the leading edge 10 until the flexible membrane 326 is in a transfer configuration, shown in Figure 10b, in which the flexible membrane 326 adopts the contours of at least a portion of the leading edge 10, and in which the third substrate support 325c applies a resistive force to push the flexible membrane 326, and hence the layer of material 50, against the leading edge 10.

Referring to Figure 10a, which shows the third substrate support 325c and membrane 326 in more detail, the third substrate support 325c comprises a support frame 330 that defines an internal volume 332. The flexible membrane 326 is positioned in the frame 330 so that it is supported inside the internal volume 332 in a 'U'-shape. In this example the flexible membrane 326 is positioned in the frame 330 but it is not fixed or secured to the frame. The flexible membrane 326 may hang over (not shown) the edges 330a, 330b of the frame so that the U-shape is formed. In this way, the flexible membrane 326 is able to move over the edges of the frame 330 as the membrane is manipulated.

A substrate reinforcement in the form of a flexible reinforcing membrane 342 is positioned beneath the flexible membrane 326. In this example, the flexible reinforcing membrane 342 is positioned in the frame 330 but it is not fixed or secured to the frame. The flexible reinforcing membrane 342 may hang over (not shown) the edges 330a, 330b of the frame in the same manner as the flexible membrane 326 that defines the substrate support, so that the flexible reinforcing membrane 342 also defines a U-shape.

Beneath the membranes 326, 342, the internal volume 332 also houses a resistive element 334 in the form of an elastically deformable member, which is configured to apply a resistive force that, in use, pushes the membrane 326 against the leading edge of the blade.

A region of free space 338 is defined by the third substrate support 325c beneath the resistive element 334. In the embodiment shown, the free space 338 is created by means of element supports 336 that support the resistive element 334 at its left and right sides.

The elements supports 336 are support blocks that extend along the length of the support frame 330 in a direction parallel to the leading edge 10. The element supports 336 hold the resistive element above a base 340 of the third substrate support 325c to define the free space 338 below the resistive element 334 and between the element supports 336.

The reinforcement membrane 342 is provided in the form of a further flexible membrane and may be made of a soft, flexible material, such as a silicon rubber or a suitable plastics material such as polyurethane, polyethylene, polypropylene or nylon. The reinforcement membrane 342 is thicker than the flexible membrane 326 that defines the substrate: for example, the reinforcement membrane 342 may be twice as thick as the flexible membrane 326 that defines the substrate.

Considering now the resistive element 334 in more detail, the resistive element 334 is located in the internal volume 332 of the support frame 330 and is arranged on the side of the flexible membrane 326 that is opposite to the layer-supporting surface 327. In the orientation shown in Figure 10a the resistive element 334 is therefore arranged beneath the flexible membrane 326.

The resistive element 334 is elastically deformable. In the context of this invention "elastically deformable" means that the shape of the resistive element 334 can be changed upon application of a force and/or that the resistive element 334 can be compressed upon application of a force.

To this end, the resistive element 334 is made of an elastically deformable material. For example, the resistive element 334 may be made of a rubber foam such as a polyether foam, or any other suitable deformable material. In the embodiment illustrated, the resistive element 334 takes the form of a layer of rubber foam material, though any suitable configuration of material may be used.

Referring now to Figure 10b, if a downward force *F1* is applied generally at the centre of the resistive element 334, the resistive element 334 will be subjected to a three-point bend, with the downward force *F1* applied at the centre and opposing upward forces *F2* applied by the element supports 336 at the left and right sides of the resistive element 334. This three-point bend causes the resistive element 334 to be elastically deformed into the free space 338 to define a 'U'-shape and to be elastically compressed.

The arrangement of the third substrate support 325c and flexible membrane 326 allows the flexible membrane 326 to be moved between the presentation and transfer configurations in response to a force being exerted on the membrane 326 by the leading edge of a wind turbine blade. The presence of the free space 338 allows for particularly easy deformation of the resistive element 334 and hence allows for particularly easy reconfiguration of the flexible membrane 326.

In particular, Figure 10a illustrates the third substrate support 325c and the membrane 326 when substantially no force is applied to the membrane 326. In this state, the membrane 326 is in a generally slack or upwards configuration that corresponds to the presentation configuration. Figure 10b illustrates the third substrate support 325c the membrane 326 has been deformed downwards by the downward force *F1,* with the membrane 326 in a downwards configuration that corresponds to a transfer configuration. In this configuration the resistive element 334 has been elastically deformed into a 'U' shape such that it extends into the free space 338.

Thus, a downward force exerted on the flexible membrane 326 causes the flexible membrane 326 to adopt the transfer configuration of Figure 10b, and causes the resistive element 334 to be elastically deformed.

The use of the apparatus 300 in applying the layer of material 50 to the leading edge 10 of the wind turbine blade 12 will now be described with reference to Figures 11 to 15.

As shown in Figure 11, before the layer of cured paint 50 is applied to the leading edge 10, the solid film is laid flat and a layer of adhesive is applied to the upper surface 50b of the solid film 50. In this example, the adhesive is a layer of liquid paint 51. Transferring the film 50 from the concave shape to a flat shape for this application does not damage the film because the layer is able to deform elastically. The layer of liquid paint 51 may be applied using the applicator 324 or it may be applied using other means. In the example shown, the layer of liquid paint 51 is the same material as the liquid paint that was used to form the solid layer 50. It is dispensed so as to have a thickness that is sufficient to allow the solid film of paint 50 to bond effectively to the blade.

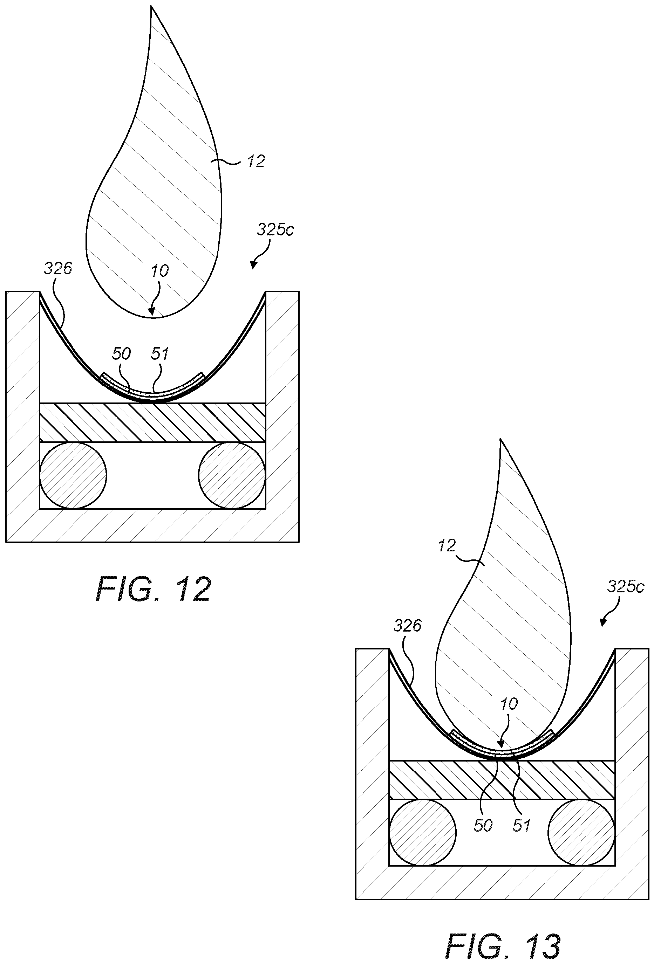

As shown in Figure 12, once the layer of liquid paint 51 (or other suitable adhesive) has been applied to the flexible membrane 326, the membrane 326 is transferred to the third substrate support 325c and arranged in place above the reinforcement membrane 342. With the flexible membrane 326 in place, the membrane 326 is now ready to be applied to the leading edge 10 of a blade 12.

To apply the solid film of paint 50 to the leading edge 10, the membrane 326 is first arranged below the blade 12. The layer of material 50 is then offered up to the leading edge 10 of the wind turbine blade 12.

To offer up the layer of material 50 to the leading edge 10, the leading edge 10 and the membrane 326 are moved relatively towards one another. In this example, the third substrate support 325c, and hence the membrane 326, are moved upwardly toward the blade. This may be achieved by means of an actuator (not shown), which may be controlled by a control system. Alternatively, the blade 12 can be moved towards the third substrate support 325c to effect the relative movement.

The relative movement continues until the layer of material 50 comes into contact with the leading edge 10 of the blade 12 as shown in Figure 13, at which point the membrane 326 is in the presentation configuration.

Initial contact occurs between the convex tip of the leading edge 10 and the layer of material 50 at a lowermost point of the concave membrane 326. In this way, the initial area of contact between the layer of material 50 and the leading edge 10 is relatively small, in this case being defined by a line of contact that runs along the line of the leading edge 10.

The flexibility of the membrane 326 means that the layer of material 50 and the leading edge 10 can be brought into contact with one another very gently. This very gentle initial contact over a relatively small initial area means that the solid film 50 is not disturbed as contact is made, which avoids displacement or wrinkling of the film. The gentle contact also ensures that there is very little displacement of the liquid adhesive layer 51 as contact is made, so that the adhesive layer remains at, or close to, a constant predetermined thickness in the central part of the layer, and the solid layer is applied evenly to the leading edge.

After initial contact has been made, relative movement continues and the leading edge 10 of the blade 12 is pushed gradually further against the flexible membrane 326.

As the leading edge 10 is pushed further into the flexible membrane 326, the membrane 326 gradually wraps around the leading edge 10 so that the area of contact between the layer of material 50 and the leading edge 10 gradually increases, with the area of contact growing outwardly towards edges of the flexible membrane 326. The flexible membrane 326 therefore gradually wraps around the leading edge 10, adopting the contours of the leading edge 10 as it does so until the curvature of the membrane 326 matches the curvature of the leading edge 10.

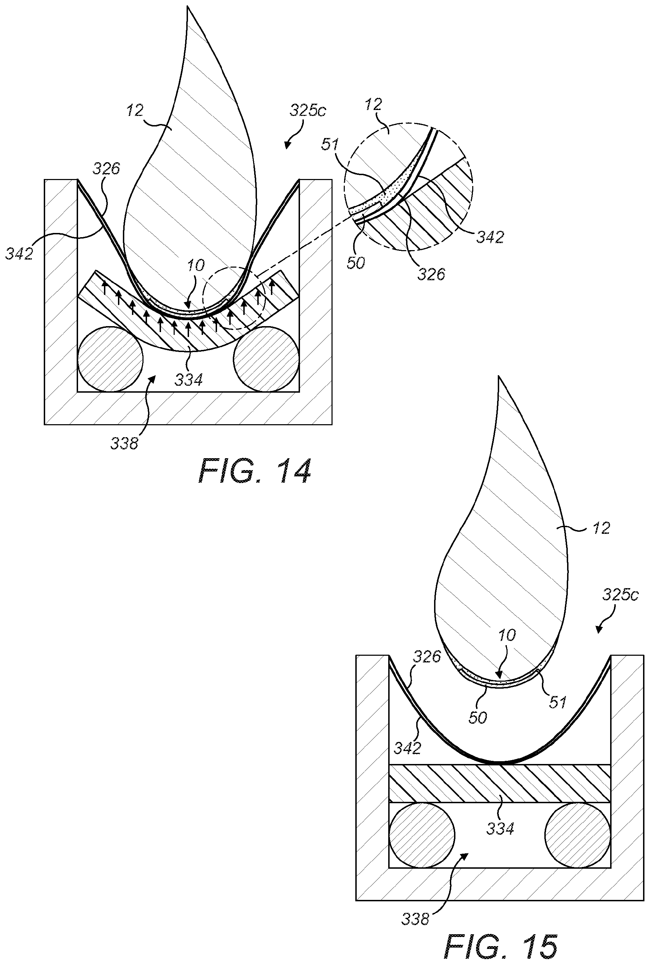

Once the flexible membrane 326 has been sufficiently wrapped around the leading edge 10, the entirety of the layer of material 50 is in contact with the leading edge 10 and has adopted the contours of the leading edge 10. The flexible membrane 326 is then in the transfer configuration, which is shown in Figure 14.

Gradually increasing the area of contact so as to grow the area towards the edges of the membrane means that the contact can remain consistently gentle. This gentle contact guards against disturbance of the solid layer to avoid displacement, breakage and wrinkling of the layer. The gentle contact also guards against displacement of the liquid adhesive layer as the area of contact increases to ensure an even adhesive layer and hence even application of the solid layer of material.

Growing the area of contact outwardly also tends to cause air to be effectively expelled towards the edges of the membrane as the area of contact grows, which guards against air becoming trapped between the layer of material 50 and the leading edge 10 of the wind turbine blade 12.

Thus, the flexible membrane 326 and hence the layer of material 50 are wrapped around the leading edge 10 of the wind turbine blade 12, so that the layer of material 50 is forced to adopt the contours of the leading edge 10 of the wind turbine blade 12. The layer of material 50 on the flexible membrane 326 also adopts the contours of the leading edge 10.

As the area of contact reaches the edges of the layer of material 50, some of the liquid adhesive material 51 that sits between the solid layer 50 and the leading edge 10 in the edge region is displaced slightly outwardly (i.e. toward the trailing edge of the blade), beyond the edge of the solid layer 50. The flexible membrane 326 tends to smooth this adhesive out as it is wrapped around the leading edge 10 to give a layer thickness that tapers to zero in the edge region, as can be seen in the partial close-up inset into Figure 14.

In this way, the wrapping motion provides a layer that is of substantially uniform thickness throughout the bulk of the layer, but provides a small edge region in which the thickness of the layer tapers to zero. As a result, there is no step at the edge of the paint layer 50, unlike in conventional painting in which there is a step at the edge of the paint, and no need to finish the application by hand to remove any excess materials.

The absence of the step at the edge of the paint layer gives the blade an improved aerodynamic performance during use.

In addition to providing this automatic reconfiguration of the membrane 326 into the transfer configuration, the third substrate support 325c and membrane 326 are also configured such that the resistive element 334 causes the membrane 326 to exert a force on the leading edge 10 as the membrane 326 and leading edge 10 are displaced towards one another.

As the leading edge 10 and the flexible membrane 326 are moved towards one another, the leading edge 10 pushes the flexible membrane 326 into the resistive element 334, with the reinforcement membrane 342 sandwiched between the flexible membrane 326 and the resistive element, so as to exert a downward force at the centre of the resistive element 334.

This downward force causes the three-point bend described above that elastically deforms the resistive element 334 into the free space 338, causing the resistive element 334 to adopt a 'U' shape, and to be elastically compressed.

As a result of the elastic deformation of the resistive element 334, elastic restoring forces tend to counter the deformation and exert a resistive force upwards towards the leading edge 10 as indicated by the arrows in Figure 14. In this way, the resistive element 334 pushes the flexible membrane 326, and hence the layer of material 50 against the leading edge 10.

In this transfer configuration, upward forces are exerted on the leading edge 10. The elastic restoring force caused by deformation of the resistive element 334 tend to push the membrane 326 upwards as has been described. This force causes the membrane 326 to push the layer of material 50 gently onto the leading edge 10. This pushing action ensures that the layer of material is wrapped closely around the leading edge 10 so as to conform exactly to the contours of the leading edge, and also facilitates transfer from the membrane 326 to the leading edge 10.

The reinforcement membrane 342 acts to spread the upward force exerted by the resistive element 334 evenly across the flexible membrane 326. The reinforcement membrane 342 thereby counters any unevenness in the foam layer of the resistive element 334 to ensure an even distribution of force across the flexible membrane 326, and hence across the layer of material 50. In other words, the reinforcement membrane 342 prevents any imperfections (such as wrinkles) in the foam layer 334 from being transferred to the flexible membrane 326, and hence across the layer of material 50.

Once the flexible membrane 326 has been arranged in the transfer configuration, the layer of material 50 is transferred to the leading edge 10 of the wind turbine blade 12.

As noted above, in this example the flexible membrane 326 and the reinforcement membrane 342 are not secured to the frame 330. This means that these membranes do not experience any strain (in the form of stretching) when the leading edge 10 is pushed into the membranes. Avoiding stretching in this way helps to avoid wrinkles in the layer of material and hence to maintain the smoothness of the layer 50.

Because the surface of the flexible membrane 326 is a non-stick surface, the layer of material 50 tends to bond more strongly to the surface of the leading edge 10 of the blade 12, and is thereby transferred from the flexible membrane 326 to the leading edge 10. A release coating may be used to further facilitate transfer from the membrane 326 to the leading edge 10. The smoothness of the membrane 326 also provides for a particularly smooth finish on the external surface of the layer of material 50 that is applied to the leading edge 10, which improves the aerodynamic performance of the blade 12.

At this stage, the adhesive 51 is allowed to cure. This may involve simply waiting for a period of time for the adhesive to cure at room temperature. It may also involve heating the layer of adhesive to facilitate curing. To this end, a heating means (not shown) may be incorporated into the third substrate support 325c to heat the flexible membrane 326.

Once a sufficient time period has elapsed the flexible membrane 326 is moved gently away from the leading edge 10 of the blade 12. As the flexible membrane 326 is moved away, the layer of material 50 remains in contact with the leading edge 10, as shown in Figure 15. The layer of material 50 and adhesive 51 is of substantially uniform and pre-determined thickness, except at the edge regions in which the thickness tapers to zero. The layer of material 50 also has substantially no voids between the material 50 and the leading edge 10, and is effectively bonded to the leading edge 10 of the wind turbine blade 12.

The apparatus can then be used to apply further layers of material to the leading edge of the same blade or to the leading edge of different blades.

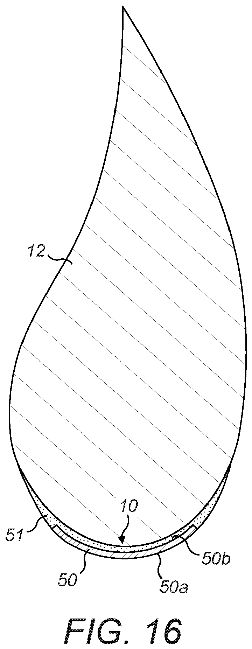

As shown in Figure 16, when the film of paint 50 is applied to the convex surface of the leading edge 10, it is forced to adopt a concave shape, similar to the shape that it adopted in the curing configuration of Figure 8.

The upper surface 50b that defined the outward-facing surface as the film 50 was made now faces against the convex surface of the leading edge 12, and the lower surface 50a that defined the substrate-facing surface as the film was made will face away from the surface of the leading edge 10.

When the film of solid paint 50 is forced to adopt this concave configuration, the film returns to a curved configuration that is similar to or close to the curved configuration that it adopted during curing.

In this curved configuration, the outer surface 50a of the film of solid paint 50 that faces away from the blade 10 has a larger radius of curvature than the inner surface of the film that lies against the blade. Thus, the film has different degrees of curvature in the upper and lower surfaces.

If the film had not been cured into the curved configuration, but had instead been cured flat, the different degrees of curvature at the upper and lower surfaces would result in induced strain and stress in the film that would be of different degrees in the upper and lower surfaces 50a, 50b. If the film were under sufficient strain this may decrease the erosion performance of the film, because the film will not absorb precipitation impact as effectively as a film which is not under strain.

However, by curing the paint into a concave shape rather than allowing the paint to cure while laid flat, the paint undergoes curing in a configuration that is closer to the concave shape that it will eventually adopt when applied to the convex surface of the leading edge. When the layer is applied to the leading edge in its concave configuration, its shape does not differ significantly from its cured shape and there is therefore substantially no stress or strain present in the film. In particular, the layer 50 has a sufficiently low strain that its erosion performance is substantially unaffected. Thus, when the layer 50 is on the leading edge 10, the net stress in the film is reduced compared to the net stress that would have been present in a film that had been cured in a flat configuration.

Curing the paint into a concave shape therefore reduces strain and stress in the applied film, which avoids the degradation of the erosion performance.

This concave pre-curing is particularly beneficial at higher thicknesses of the layer of material 50, since the strain differential between the upper and lower surfaces increases with the film thickness. For example, in the absence of this curved curing process, for a leading edge having a 10 mm radius of curvature, a film of 0.2 mm thickness would give a strain of approximately 2% when the flat polymer film is stretched around the leading edge, while a film of 1 mm thickness would experience a greater strain of approximately 10%.

In the embodiment described above, the same flexible substrate 326 is used to make the layer of material and to apply the layer of material to the leading edge. However, embodiments are envisaged in which the layer of material is made on a first substrate part and then transferred to a second substrate part for application to the leading edge of the blade. To this end, the flexible substrate may comprise first and second flexible substrate parts, the first flexible substrate part being reconfigurable into the application and curing configurations and the second flexible substrate part being reconfigurable into the presentation and transfer configurations.

Although in the embodiment described the substrate support comprises first, second and third support structures, other suitable configurations of the substrate support are envisaged that allow the membrane to be supported in the application, curing, presentation and transfer configurations. For example, the substrate support may comprise a single support structure configured to support the membrane in all configurations. To this end, the single support structure may comprise both flat and curved surfaces. Other embodiments are envisaged in which a first support structure is configured to support the membrane in the application and curing configurations and a second support structure is configured to support the membrane in the presentation and transfer configurations.

It is also envisaged that to support the membrane in the curing configuration, the membrane may be suspended such that gravity allows the membrane to adopt a U-shaped configuration, in which case the curved surface of the substrate support may be omitted.

To move the layer 50 between the different configurations shown in Figures 5 to 8, the first substrate support 325a and the second substrate support 325b may be in the form of vacuum tables that suck the flexible substrate 326 onto their surfaces, and retain the flexible substrate 326 firmly in position.

Although in the embodiments described the flexible membrane 326 and reinforcement membrane 342 are positioned in the support frame such that the membranes 326, 342 adopt a concave configuration when in the presentation configuration, this need not be the case. For example, embodiments are envisaged in which the flexible membrane 326 and/or the reinforcement membrane 342 are laid flat on the resistive element 334. In this case the flexible membrane 326 may be in a flat configuration when it is presented to the leading edge 10, such that the presentation configuration is a substantially flat configuration. In another example, the resistive element 334 may have a concave shape such that the flexible membrane 326 carrying the curved film 50 can lie in a concave shape for presentation to the leading edge.

Embodiments are also envisaged in which the flexible membrane 326 is arranged in a convex configuration during curing of the layer, such that, during curing, the surface of the layer 50 supported by the membrane would be concave, and the surface of the layer facing outwardly, away from the membrane would be convex. In these embodiments, the layer of material 50 would be removed from the membrane after curing, inverted, and re-applied to the same, or a different, membrane in its inverted form, with the surface that had been concave during curing facing outwardly, away from the membrane, for presentation to the leading edge. In this way, although the layer would be cured in a convex shape, the layer would be applied to the leading edge such that the surface that had been concave during the curing process would lie against the leading edge of the wind turbine blade, thereby resulting in substantially no stress in the layer of material when applied to the leading edge.

The reinforcement membrane 342 is an optional feature and may be omitted from the third substrate support 325c. For example, the upward force exerted by the resistive element 334 and the flexible membrane 326 alone may be sufficiently high and sufficiently even that the reinforcement membrane 342 is not required.

The resistive element 334 need not take the form of a layer of material but may take any suitable form. For example, the resistive element may comprise multiple layers of material, or may comprise a block of material. Embodiments are also envisaged in which the element supports are omitted and there is no free space provided beneath the resistive element 334, but in which the resistive element is sufficiently large and sufficiently easily deformable that it can deform to accommodate the leading edge of the blade without the need for free space.

Although in the embodiment described the layer of liquid material is applied using an applicator of the sort shown in Figures 2 and 3, the layer of liquid material could be applied by other means, for example by pouring the liquid material onto the surface or using a device such as a brush or spatula.

The flexible membrane 326 and the reinforcement membrane 342 could in an example be secured to the frame 330. In this case, when the leading edge 10 is pushed onto the flexible membrane 326, the flexible membrane will experience some strain as it is stretched and becomes taut. However, as the geometry of the leading edge 10 changes along the length of the wind turbine blade a taut membrane may introduce wrinkles into the film 50. Therefore, it is preferred for the membranes to be unsecured to the frame 330.

Although the invention is particularly effective in applying uniform layers of material to a leading edge of a wind turbine blade, it is also envisaged that the invention may be used to apply layers of non-uniform thickness. For example, the slot in the dispensing container may be shaped to as to provide a layer of varying thickness.

In the embodiment described, the membrane 326 is uniform across its entire surface, however, this need not be the case. For example, the membrane may be provided with ridge formations to hold the liquid material in a particular place during curing.

The layer of adhesive may be a solid layer of pressure sensitive adhesive. The film and adhesive may then be offered up to the leading edge 10 in the same way as described above, with the membrane 326 being arranged in the presentation configuration. The membrane 326 and hence the solid film and adhesive layer may then be wrapped around the leading edge as described above.

The method and apparatus described can be used to apply a layer of material to the leading edge of the wind turbine blade during manufacture of the blade, or they can be used to apply a layer of material to the leading edge of the wind turbine blade in-situ when it is installed on wind turbine or on the ground. Although in the example described above the apparatus is used in a horizontal orientation, the apparatus may be used in any suitable orientation to apply the layer to the leading edge: for, example, the apparatus may be used in a vertical orientation, particularly if used to apply a layer of material to a leading edge while the blade is in-situ.

The present invention is therefore not limited to the exemplary embodiments described above and many other variations or modifications will be apparent to the skilled person without departing from the scope of the present invention as defined in the following claims.

## Claims

1. A method of making a layer of cured material (50) for application to a leading edge (10) of a wind turbine blade (12), the method comprising:
arranging a flexible substrate (326) in an application configuration in which a layer-supporting surface (327) of the flexible substrate is substantially flat;
applying a layer of liquid material (50) to the layer-supporting surface (327);
reconfiguring the flexible substrate (326) into a curing configuration in which a part of the layer-supporting surface (327) that supports the layer of material (50) is curved; and
curing the layer of material (50) with the flexible substrate (326) in the curing configuration to form a curved layer of cured material on the flexible substrate.

2. The method of Claim 1, wherein the step of arranging the flexible substrate (326) in the application configuration comprises arranging at least a part of the flexible substrate on a flat surface (329a).

3. The method of Claim 1 or Claim 2, wherein the step of arranging the flexible substrate (326) in the curing configuration comprises arranging at least a part of the flexible substrate on a curved surface (331).

4. The method of any preceding claim, wherein the step of reconfiguring the flexible substrate (326) comprises moving the flexible substrate from a first support structure (325a) configured to support the flexible substrate in the application configuration to a second support structure (325b) configured to support the flexible substrate in the curing configuration.

5. The method of any preceding claim, wherein the layer of liquid material applied to the layer-supporting surface (327) defines a footprint that is elongate along a longitudinal axis, and the step of reconfiguring the flexible substrate (326) into the curing configuration comprises causing at least a part of the flexible substrate to fold about the longitudinal axis.

6. The method of any preceding claim, wherein the step of applying a layer of liquid material to the layer-supporting surface (327) comprises applying a liquid layer of substantially uniform thickness to the layer-supporting surface.

7. The method of Claim 6, wherein the step of applying a liquid layer of substantially uniform thickness comprises:
providing a liquid container (40) comprising a dispensing slot (46) of substantially uniform height;
allowing liquid to flow from the liquid container onto the layer-supporting surface (327) via the dispensing slot.

8. The method of any preceding claim, comprising applying a layer of liquid material having a thickness less than 5 mm.

9. The method of any preceding claim, comprising allowing the layer of liquid material to cure at least partially to increase the viscosity of the liquid layer before reconfiguring the flexible substrate (326) into the curing configuration.

10. The method of any preceding claim, comprising heating the layer of material while the flexible substrate (326) is in the curing configuration to cure the layer of liquid material.

11. The method of any preceding claim wherein the liquid material comprises a curable liquid paint or resin.

12. A method of applying a layer of material (50) to a leading edge (10) of a wind turbine blade (12), the method comprising:
making a layer of cured material according the method of any of Claims 1 to 10; and
applying the layer of cured material to the leading edge.

13. The method of Claim 12, wherein the step of applying the layer of cured material (50) to the leading edge (10) of the wind turbine blade (12) comprises:
wrapping a flexible substrate (326) supporting the layer of cured material around the leading edge; and
transferring the layer of material from the flexible substrate to the leading edge of the wind turbine blade.

14. The method of Claim 13, wherein the step of wrapping the flexible substrate (326) around the leading edge comprises:
arranging the flexible substrate (326) in relation to the leading edge (10) of the wind turbine blade (12) with the flexible substrate in a presentation configuration such that an initial area of contact is defined between the layer of material (50) and the leading edge; and
reconfiguring the flexible substrate (326) into a transfer configuration in which the flexible substrate adopts to the contours of the leading edge (10) by increasing the area of contact between the layer of material and the leading edge.

15. The method of any of Claims 12 to 14, wherein the layer of material (50) is applied to the blade (12) in-situ on a wind turbine.

## Patentansprüche

1. Verfahren zum Herstellen einer Schicht aus ausgehärtetem Material (50) zum Auftragen auf eine Blattvorderkante (10) eines Windkraftanlageblatts (12), wobei das Verfahren Folgendes umfasst:
Anordnen eines flexiblen Substrats (326) in einer Auftragskonfiguration, bei welcher eine schichttragende Fläche (327) des flexiblen Substrat im Wesentlichen flach ist;
Auftragen einer Schicht aus flüssigem Material (50) auf die schichttragende Fläche (327);
Neukonfigurieren des flexiblen Substrats (326) in eine Aushärtungskonfiguration, in welcher ein Teil der schichttragenden Fläche (327), welche die Schicht aus dem Material (50) trägt, gebogen ist; und
Aushärten der Schicht aus dem Material (50) mit dem flexiblen Substrat (326) in der Aushärtungskonfiguration, um eine gebogene Schicht aus ausgehärtetem Material auf dem flexiblen Substrat zu bilden.

2. Verfahren nach Anspruch 1, wobei der Schritt des Anordnens des flexiblen Substrats (326) in der Auftragskonfiguration das Anordnen mindestens eines Teils des flexiblen Substrats auf einer flachen Fläche (329a) umfasst.

3. Verfahren nach Anspruch 1 oder Anspruch 2, wobei der Schritt des Anordnens des flexiblen Substrats (326) in der Aushärtungskonfiguration das Anordnen mindestens eines Teils des flexiblen Substrats auf einer gebogenen Fläche (331) umfasst.

4. Verfahren nach einem der vorstehenden Ansprüche, wobei der Schritt des Neukonfigurierens des flexiblen Substrats (326) das Bewegen des flexiblen Substrats von einer ersten Tragestruktur (325a), die konfiguriert ist, das flexible Substrat in der Auftragskonfiguration auf einer zweiten Tragestruktur (325b) zu tragen, die konfiguriert ist, das flexible Substrat in der Aushärtungskonfiguration zu tragen, umfasst.

5. Verfahren nach einem der vorstehenden Ansprüche, wobei die Schicht aus flüssigem Material, die auf die schichttragende Fläche (327) aufgetragen wird, eine Standfläche definiert, die sich entlang einer Längsachse ausdehnt, und der Schritt des Neukonfigurierens des flexiblen Substrats (326) in der Aushärtungskonfiguration das Bewirken, dass sich mindestens ein Teil des flexiblen Substrats um die Längsachse faltet, umfasst.

6. Verfahren nach einem der vorstehenden Ansprüche, wobei der Schritt des Auftragens einer Schicht aus flüssigem Material auf die schichttragende Fläche (327) das Auftragen einer flüssigen Schicht von im Wesentlichen einheitlicher Stärke auf die schichttragende Fläche umfasst.

7. Verfahren nach Anspruch 6, wobei der Schritt des Auftragens einer flüssigen Schicht von im Wesentlichen einheitlicher Stärke Folgendes umfasst:
Bereitstellen eines Flüssigkeitsbehälters (40), umfassend einen Ablaufschlitz (46) von im Wesentlichen einheitlicher Höhe;
Zulassen, dass Flüssigkeit von dem Flüssigkeitsbehälter auf die schichttragende Fläche (327) über den Ablaufschlitz läuft.

8. Verfahren nach einem der vorstehenden Ansprüche, umfassend das Auftragen einer Schicht aus flüssigem Material, das eine Stärke von weniger als 5 mm aufweist.

9. Verfahren nach einem der vorstehenden Ansprüche, umfassend das mindestens teilweise Aushärtenlassen des flüssigen Materials, um die Viskosität der flüssigen Schicht zu erhöhen, bevor das flexible Substrat (326) in die Aushärtungskonfiguration neu konfiguriert wird.

10. Verfahren nach einem der vorstehenden Ansprüche, umfassend das Erwärmen der Materialschicht, während sich das flexible Substrat (326) in der Aushärtungskonfiguration befindet, um die Schicht aus flüssigem Material auszuhärten.

11. Verfahren nach einem der vorstehenden Ansprüche, wobei das flüssige Material einen aushärtbaren Lack oder Harz umfasst.

12. Verfahren des Auftragens einer Schicht aus Material (50) auf eine Blattvorderkante (10) eines Windkraftanlageblatts (12), wobei das Verfahren Folgendes umfasst:
Herstellen einer Schicht aus ausgehärtetem Material nach dem Verfahren nach einem beliebigen der Ansprüche 1 bis 10; und
Auftragen der Schicht aus ausgehärtetem Material auf die Blattvorderkante.

13. Verfahren nach Anspruch 12, wobei der Schritt des Auftragens der Schicht aus ausgehärtetem Material (50) auf die Blattvorderkante (10) des Windkraftanlageblatts (12) Folgendes umfasst:
Umwickeln eines flexiblen Substrats (326), das die Schicht aus ausgehärtetem Material um die Blattvorderkante herum trägt; und
Übertragen der Schicht aus dem Material von dem flexiblen Substrat auf die Blattvorderkante des Windkraftanlageblatts.

14. Verfahren nach Anspruch 13, wobei der Schritt des Umwickelns des flexiblen Substrats (326) um die Blattvorderkante herum Folgendes umfasst:
Anordnen des flexiblen Substrats (326) in Bezug auf die Blattvorderkante (10) des Windkraftanlageblatts (12), wobei sich das flexible Substrat in einer Präsentationskonfiguration befindet, sodass ein anfänglicher Kontaktbereich zwischen der Schicht aus dem Material (50) und der Blattvorderkante definiert ist; und
Neukonfigurieren des flexiblen Substrats (326) in eine Übertragungskonfiguration, in welcher das flexible Substrat die Konturen der Blattvorderkante (10) annimmt, indem der Kontaktbereich zwischen der Schicht aus dem Material und der Blattvorderkante erhöht wird.

15. Verfahren nach einem der Ansprüche 12 bis 14, wobei die Schicht aus dem Material (50) vor Ort an einer Windkraftanlage auf das Blatt (12) aufgetragen wird.

## Revendications

1. Procédé de réalisation d'une couche de matériau durci (50) à appliquer à un bord d'attaque (10) d'une pale d'éolienne (12), le procédé comprenant :
l'agencement d'un substrat souple (326) dans une configuration d'application dans laquelle une surface de support de couche (327) du substrat souple est sensiblement plate ;
l'application d'une couche de matériau liquide (50) à la surface de support de couche (327) ;
la reconfiguration du substrat souple (326) dans une configuration de durcissement dans laquelle une partie de la surface de support de couche (327) qui supporte la couche de matériau (50) est incurvée ; et
le durcissement de la couche de matériau (50) avec la couche souple (326) dans la configuration de durcissement pour former une couche incurvée de matériau durci sur le substrat souple.

2. Procédé selon la revendication 1, dans lequel l'étape de l'agencement du substrat souple (326) dans la configuration d'application comprend l'agencement d'au moins une partie du substrat souple sur une surface plate (329a).

3. Procédé selon la revendication 1 ou 2, dans lequel l'étape de l'agencement du substrat souple (326) dans la configuration de durcissement comprend l'agencement d'au moins une partie du substrat souple sur une surface incurvée (331).

4. Procédé selon l'une quelconque des revendications précédentes, dans lequel l'étape de la reconfiguration du substrat souple (326) comprend le déplacement du substrat souple depuis une première structure de support (325a) configurée pour supporter le substrat souple dans la configuration d'application jusqu'à une seconde structure de support (325b) configurée pour supporter le substrat souple dans la configuration de durcissement.

5. Procédé selon l'une quelconque des revendications précédentes, dans lequel la couche de matériau liquide appliquée à la surface de support de couche (327) définit une empreinte qui est allongée le long d'un axe longitudinal, et l'étape de la reconfiguration du substrat souple (326) dans la configuration de durcissement comprend le fait d'amener au moins une partie du substrat souple à se replier autour de l'axe longitudinal.

6. Procédé selon l'une quelconque des revendications précédentes, dans lequel l'étape de l'application d'une couche de matériau liquide à la surface de support de couche (327) comprend l'application d'une couche liquide d'épaisseur sensiblement uniforme à la surface de support de couche.

7. Procédé selon la revendication 6, dans lequel l'étape de l'application d'une couche liquide d'épaisseur sensiblement uniforme comprend :
la fourniture d'un récipient de liquide (40) comprenant une fente de distribution (46) de hauteur sensiblement uniforme ;
l'autorisation à un liquide de s'écouler du récipient de liquide sur la surface de support de couche (327) par l'intermédiaire de la fente de distribution.

8. Procédé selon l'une quelconque des revendications précédentes, comprenant l'application d'une couche de matériau liquide ayant une épaisseur inférieure à 5 mm.

9. Procédé selon l'une quelconque des revendications précédentes, comprenant l'autorisation à la couche de matériau liquide de durcir au moins partiellement pour augmenter la viscosité de la couche liquide avant la reconfiguration du substrat souple (326) dans la configuration de durcissement.

10. Procédé selon l'une quelconque des revendications précédentes, comprenant le chauffage de la couche de matériau pendant que le substrat souple (326) est dans la configuration de durcissement pour durcir la couche de matériau liquide.

11. Procédé selon l'une quelconque des revendications précédentes, dans lequel le matériau liquide comprend une peinture ou résine liquide durcissable.

12. Procédé d'application d'une couche de matériau (50) à un bord d'attaque (10) d'une pale d'éolienne (12), le procédé comprenant :
la réalisation d'une couche de matériau durci selon le procédé de l'une quelconque des revendications 1 à 10 ; et
l'application de la couche de matériau durci au bord d'attaque.

13. Procédé selon la revendication 12, dans lequel l'étape de l'application de la couche de matériau durci (50) au bord d'attaque (10) de la pale d'éolienne (12) comprend :
l'enroulement d'un substrat souple (326) supportant la couche de matériau durci autour du bord d'attaque ; et
le transfert de la couche de matériau du substrat souple au bord d'attaque de la pale d'éolienne.

14. Procédé selon la revendication 13, dans lequel l'étape de l'enroulement du substrat souple (326) autour du bord d'attaque comprend :
l'agencement du substrat souple (326) par rapport au bord d'attaque (10) de la pale d'éolienne (12) avec le substrat souple dans une configuration de présentation telle qu'une zone de contact initiale soit définie entre la couche de matériau (50) et le bord d'attaque ; et
la reconfiguration du substrat souple (326) dans une configuration de transfert dans laquelle le substrat souple suit les contours du bord d'attaque (10) en augmentant la zone de contact entre la couche de matériau et le bord d'attaque.

15. Procédé selon l'une quelconque des revendications 12 à 14, dans lequel la couche de matériau (50) est appliquée à la pale (12) in situ sur une éolienne.
